# EUROPEAN PATENT SPECIFICATION

(11) **EP 2 826 980 B1**
(45) Date of publication and mention of the grant of the patent: **22.11.2017**
(21) Application number: 13760395.7
(22) Date of filing: 04.03.2013
(51) Int. Cl.: F02D 29/02, F02D 17/00, B60K 28/04, B60K 28/10, B60K 28/12, B60R 22/48

(54) **IDLING STOP CONTROL DEVICE**
VORRICHTUNG ZUR LEERLAUFSTOPPSTEUERUNG
DISPOSITIF DE COMMANDE D'ARRÊT DE RALENTI

(30) Priority: 12.03.2012 JP 2012054567
(43) Date of publication of application: 21.01.2015
(73) Proprietor: NISSAN MOTOR CO., LTD., Yokohama-shi, Kanagawa 221-0023 (JP)
(72) Inventor: HOSAKA, Yuuichi, Atsugi-shi, Kanagawa 243-0123 (JP); SHIMIZU, Hiromoto, Atsugi-shi, Kanagawa 243-0123 (JP); TAHARA, Masahiko, Atsugi-shi, Kanagawa 243-0123 (JP); OCRAN, Shiho, Atsugi-shi, Kanagawa 243-0123 (JP)
(74) Representative: Hoefer & Partner Patentanwälte mbB
(86) International application number: PCT/JP2013/055792
(87) International publication number: WO 2013/137038

(56) References cited:
- EP-A2- 2 223 835
- DE-A1-102008 052 839
- DE-C1- 10 211 466
- FR-A1- 2 955 072
- GB-A- 2 424 505
- JP-A- H10 131 781
- JP-A- 2001 097 071
- JP-A- 2008 510 928
- JP-A- 2010 223 216
- JP-A- 2010 223 216

## Description

### TECHNICAL FIELD

The present invention relates to an idling stop control system.

### BACKGROUND

Conventionally, a technique is known in an idling stop control system for a vehicle in which the execution of the idling stop is prohibited when the vehicle door is opened (to continue the engine to run) while releasing the execution of the idling stop upon the door being opened while the idling stop is being executed (to restart the engine) so that the restart of the engine is avoided when getting on and off the vehicle and the disadvantages such as battery consumption associated with the engine stop may be avoided (Patent Document 1).

### PRIOR ART LITERATURE

### PATENT DOCUMENT

Patent Document 1: Japanese Patent Application Publication No. 2011-106357 A

### SUMMARY OF THE INVENTION

### PROBLEM SOLVED BY THE INVENTION

However, in the conventional control method, there is a problem that the valuable idling stop control system will not function effectively since the engine will be set in a driven state when the vehicle door is opened. In addition, such a control mode is also conceivable in which the getting off of a vehicle occupant is assumed when the vehicle door is opened, and the idling stop control is automatically cancelled (to transition to a compulsory engine stall state) in order to inhibit an automatic return (to restart the engine) from the idling stop. However, it will be inconvenient due to the necessity of key operation for starting the engine each time since an automatic return is no longer done despite the lack of actual intention to get off the vehicle. Generic DE 10 2008 052 839 A1 describes a control device for use in a car, which is designed to output control signals for automatically starting an engine, if reaching or exceeding a predetermined position of a clutch pedal within a predetermined time interval is detected after detection of engine stalling.

DE 102 11 466 C1 discloses an automatic stop-start method for an automobile IC engine with selective over-ride of start stop function dependent on safety operating requirements for an automobile.

GB 2 424 505 A describes a vehicle safety apparatus comprises control means, timer means, detection means and deactivation means which are selectively arranged to deactivate the engine of a vehicle. The detection means is arranged to detect whether an operator is within the vehicle. If an operator is not detected, the detection means, signals the timer means to commence timing a delay period. When the delay period expires the deactivation means deactivates the engine of the vehicle. However, if an operator is detected within the vehicle during the delay period then the timer means is reset.

JP 2010-223216 describes a clutch device being arranged between an engine and a transmission for cutting off and transmitting motive power in response to operation by the driver. An ECU automatically stops the engine when a predetermined stopping condition is established when operating the engine, and restarts the engine when a predetermined restarting condition is established after stopping its engine. The ECU determines that the step-releasing operation of a clutch pedal is started as a restarting condition. The ECU detects a clutch operation state in the step-releasing operation of the clutch pedal, and permits or prohibits the restart of the engine based on the detected clutch operation state.

EP 2 223 835 A2 describes a system is installed in a vehicle having an internal combustion engine, a transmission, and a clutch. The system restarts, according to at least one engine restart condition is met, the internal combustion engine that has been automatically controlled for stop thereof. The system includes a restart-condition determiner configured to determine that, as the at least one engine restart condition, an operation of the clutch is started by a driver of the vehicle for shifting the second state to the first state. The system includes a state detector configured to detect an operated state of the clutch during the clutch is shifted from a disengagement state to an engagement state. The system includes a restart controller configured to determine whether to enable or disable the restart of the internal combustion engine according to the operated state of the clutch detected by the state detector.

The object of the present invention is to provide an idling stop control system that can function to perform an idling stop control more effectively.

### MECHANISM FOR SOLVING THE PROBLEM

According to the present invention, while allowing the engine to be restarted when an engine restart condition is satisfied when a vehicle door is in the open state with the driver's seat belt being in the fastening state or when the vehicle door is in the closed state with the driver's seat belt being non-fastening state, the engine restart will be prohibited even if the engine restart condition is satisfied when the vehicle door is in the open state with the driver's seat belt being in the non-fastening state so as to solve the problem described above.

### EFFECT OF THE INVENTION

The cases where the vehicle door is in the open state with the driver's seat belt being in fastening state or the vehicle door is in the closed state with the driver's seat belt being in non-fastening state may be determined as a temporary or provisional operation of the driver, rather than the intention of getting off. In contrast, in a case where the door is in the open state with the driver's seat belt being non-fastening state, it is possible to determine the getting-off state of the driver. Thus, according to the present invention, the engine restart will be allowed in the former case while the engine start will be prohibited in the latter case so that the idling stop state will be maintained even if the vehicle door is opened or closed or the driver's seat belt is unfastened or detached temporarily or provisionally. As a result, the idling stop control can be rendered to function more effectively.

### BRIEF DESCRIPTION OF THE DRAWINGS

FIG. 1 is a block diagram illustrating an idling stop control system in a first according to the present invention;
FIG. 2 is a flowchart showing a control procedure in a case when the vehicle door is opened, or the driver's seat belt has come off, etc. during an idling stop operation in the idling stop system of FIG 1;
FIG. 3 is a flowchart shows a control procedure when the restart request signal is input during an idling stop operation in the idling stop system of FIG 1;
FIG. 4 is a control time chart of the idling stop system in FIG. 1 (First case: A case the engine is restarted in response to a clutch depression with the engine being stopped and seat belt being worn; the solid line shows the embodiment whereas the dotted line shows a comparative example);
FIG. 5 is a control time chart of the idling stop system in FIG. 1 (Second case: A case where an engine restart is prohibited when a predetermined time has elapsed until the clutch is depressed with the engine being stopped and the seat belt being worn; the solid line shows the embodiment whereas the dotted line shows a comparative example);
FIG. 6 is a control time chart of the idling stop system in FIG. 1 (Third case: A case where an engine restart is prohibited when the seat belt is detached and the vehicle door is opened with the engine being in a stopped state; the solid line shows the embodiment whereas the dotted line shows a comparative example);
FIG. 7 is a control time chart of the idling stop system in FIG. 1 (Fourth case: A case where an engine restart is prohibited unless the clutch is depressed even if an engine restart request has been made with the engine being in the stopped state and seat belt fastened or worn; the solid line shows the embodiment whereas the dotted line shows a comparative example).

### BEST MODE FOR CARRYING OUT THE INVENTION

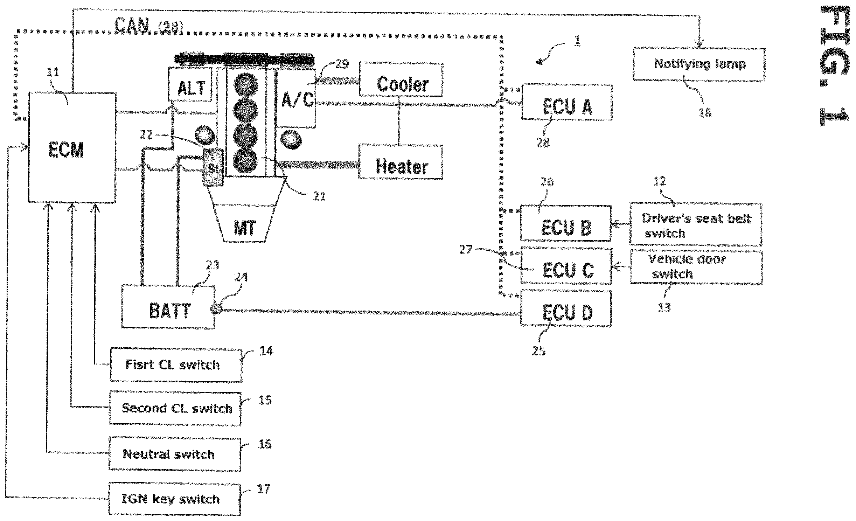

Hereinafter, a description will be given of a first embodiment according to the present invention with reference to the drawings. FIG. 1 is a block diagram showing an idling stop system 1 to which an exemplary embodiment according to the present invention is applied. The idling stop control system pertaining to the present invention is applicable to a vehicle with an internal combustion engine 21 installed including a hybrid vehicle. Although, in the following, a description is give of a vehicle with a manual transmission MT installed, the present invention is equally applicable to a vehicle having an automatic transmission

An engine 21 is controlled by an engine control module 11 (which is hereinafter abbreviated as ECM11 in some cases) such that, when the driver turns ON the ignition key switch 17, the starter motor 22 is driven through the ECM11, and the engine 21 will be started through a cranking operation. The starter motor 22 and other vehicle mounted electrical equipment are operated by power from a battery 23. Current flowing through the battery 23 is detected by a current sensor 24 (or a voltage sensor), and, based on the detected value, the remaining power of the battery 23 is calculated by the electronic control unit 25 (hereinafter, sometimes abbreviated as ECUD25 in some cases). The ECUD25 outputs a request command for restarting the engine 21 even in an idling stop state when the remaining power or storage of charge of the battery 23 falls below a predetermined value. Note that the electronic control unit 28 (hereinafter, may be abbreviated as ECUA 28) is intended to control a compressor 29 included in the cooling cycle of the air conditioner and selectively connects and disconnects a clutch of the compressor 29. When the temperature of an evaporator 29 of the air conditioner exceeds a predetermined value, it is necessary to lower the air conditioning temperature by driving the compressor 29 when the evaporator temperature rises above a predetermined value. Therefore, in such a case, a command request for restart of the engine 21 is output to the ECM 11.

The idling stop control system in the present embodiment includes the ECM 11, a driver's seat belt switch 12, a vehicle door switch 13, a first clutch switch 14, a second clutch switch 15, a neutral switch 16, and a notification lamp 18.

The driver's seat belt switch 12 detects attachment/detachment of a seat belt provided at the driver's seat, and outputs to the electronic control unit 26 (hereinafter, may sometimes be abbreviated as ECUB 26) a detection signal indicating the seat belt is in an engagement state or disengagement state. The ECUB 26 outputs this detection signal to the ECM 11 via the CAN network 28. The engagement/disengagement state of the seat belt may be detected by a sensor mounted in a fastener portion of the seat belt, for example.

The vehicle door switch 13 is not specifically limited. In the present embodiment, the open or closed state of the vehicle door on the driver's seat side is detected to output to an electronic control unit 27 (hereinafter may be abbreviated as ECU2). The switch may be applicable to a vehicle door other than that on the driver side as needed. The ECUC27 outputs the detection signal of the vehicle door to the ECM11 through the CAN communication network 28. The open or closed state of the vehicle door can be detected by the sensor, for example, provided in the door opening of the vehicle body.

The first clutch switch 14 detects a depression state of a clutch pedal and outputs the detection signal to the ECM11, which indicates whether the clutch pedal is depressed slightly or not stepped on. In contrast, although the second clutch switch 15 detects a depression state of the clutch pedal as well and outputs the detection signal to the ECM whether or not the clutch pedal is deeply depressed. Both the first clutch switch 14 and second clutch switch 15 can be configured by a sensor provided on the clutch pedal mechanism. The first clutch switch 14 may be referred to as a High-side clutch switch while the second clutch switch 15 may be referred to as a Low-side clutch switch as The first clutch switch 14 detects with the clutch pedal being in a high position (i.e., the clutch pedal being in a slightly depressed position so that the clutch is not fully disconnected) while the second clutch switch 15 detects with the clutch pedal being in a low position (i.e., with the clutch pedal being in a deeply depressed position so that the clutch is in a completely disconnected position).

It should be noted that the first clutch switch 14 is provided to incorporate a depression operation of the clutch pedal as a restart condition when restarting the engine 21 from an idling stop state so that the engine 21 will be triggered to be restarted by an operation by which the clutch pedal is depressed from a neutral position of a shift lever to shift in the first gear or the like. Therefore, the restart will be judged by combined conditions of the detection signal of the first clutch switch 14with the neutral position signal of the shift lever. It is also possible to use the second clutch switch 15 at this time. It is advantageous to detect a shallow position with the first clutch switch 14 so that the time to restart the engine 21 becomes shorter.

On the other hand, the second clutch switch 15 is also a switch that has been provided to make the depression operation of the clutch pedal as the restart condition when restarting the engine 21. With respect to the second clutch switch 15, however, a case of stand-by state is assumed in which the shift lever is put in the other gear, i.e., without being put into a neutral position with the clutch pedal being depressed.

The announcement or notifying lamp 18 selectively performs a first display at which restart of the engine 21 is allowed by the depression of the clutch pedal in idling stop state and a second display at which restarting the engine 21 is not allowed by the depression of the clutch pedal in idling stop state, but restart by the ignition key switch 17 will be required. The notifying lamp can be constituted by a LED lamp, for example to thereby light the lamp in green at the first display and light the lamp in red at the second display so as to arouse attention to the driver respectively.

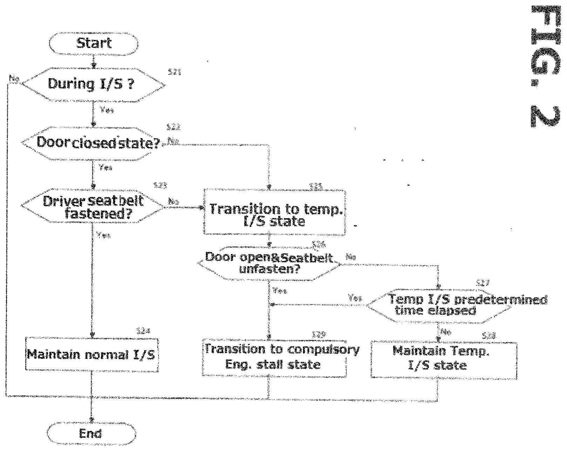

Now, a description is given of an idling stop control in the present embodiment. FIG 2 shows the control contents in an idling stop state of the engine 21 upon the idling stop condition being satisfied, when the vehicle door is opened or closed and/or the driver's seat belt is fastened or unfastened. Note that the idling stop conditions are intended to mean conditions for temporarily stopping the engine which has been in operation. For example, when an engine rotation speed is below a predetermined value and the shift position is in neutral with the clutch pedal being released (or, the foot brake is being depressed in addition), the idling stop condition will be satisfied

First, in step S21, it is determined whether or not the engine 21 is in an idling stop state, and, if YES, control proceeds to S22, while, if NO, control ends. In step S22, the open/close state of the vehicle door is detected by a vehicle door switch 13. If the vehicle door is in the closed state, control proceeds to step S23, while n the closed state, control proceeds to step S25.

In step S23, the secured or fastening state of the driver's seat belt is detected by the driver seat belt switch 12, and, if the driver seat belt is in the fastening state, control proceeds to step S24 while in the non-fastening state the process proceeds to step S25.

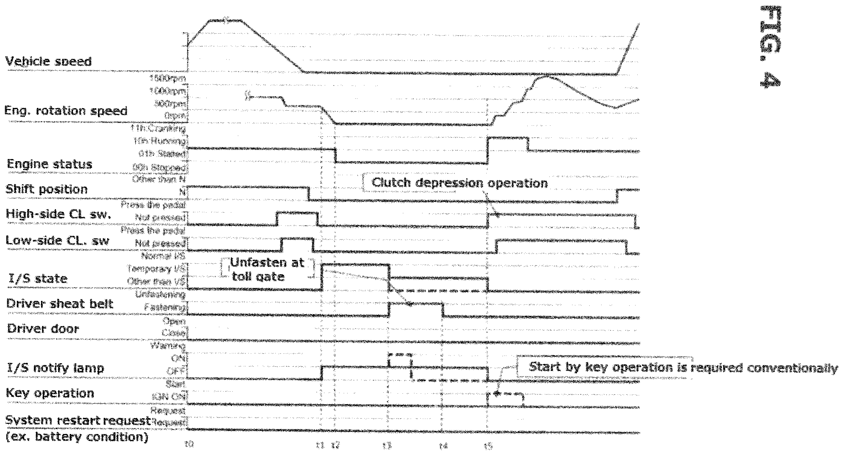

Here, when the vehicle door is closed in step S22, and if the driver seat belt is in the fastening state in step S23, a normal idling stop control continues in step S24. FIG. 4 is a control time chart of the idling stop system 1 in the present embodiment. These states correspond to time period between t0 and t2 in the figure. More specifically, since, immediately before the time t1, the clutch pedal is depressed, the shift position is changed to neutral and the clutch pedal is released while at time t1 the engine rotation speed is at a predetermined value or lower, the idling stop condition is satisfied so that control transfers to the normal idling stop control at time t1 to thereafter stop the engine 21 at time t2. Further, at the time t1 of the satisfaction of idling stop condition, the notifying lamp 18 is turned on in green to notify or arouse a condition in which restart of the engine 21 is allowable in response to the depression of the clutch pedal. When the vehicle door is in the closed state with the seat belt being fastened, this state is

In step S25, the process transitions to a temporary idling stop state when at least the vehicle door is in the open state or the driver's seat belt is unfastened or non-fastening state. Then, in step S26, it is determined whether or not the vehicle door is in the open state and the driver's seat belt is in the non-fastening state. If the vehicle door is in the open state and the driver's seat belt is in the non-fastening state, control proceeds to step S29 to transition to a compulsory engine stall state. If the vehicle door is in the open and the driver's seat belt is in the non-fastening state, i.e., if only one of these states is control proceeds to step S27 to count up a timer to determine elapse of a predetermined time. The process proceeds to step S28 if the predetermined time has not elapsed, to continue the temporarily idling stop state and the process proceeds to the next routine.

Several cases are conceivable in step S25 when either the vehicle door is in open state or the driver's seat belt is in the non-fastening state after having transitioned to the temporarily idling stop state. For example, such cases are assumed in which the driver's seat belt is unfastened to pay toll at a toll booth of a toll road or to take luggage of rear seat, or the vehicle door is opened provisionally or temporarily for some reason. In the present embodiment, instead of releasing the idling stop control immediately to bring the engine 21 to a compulsory engine stall state, a predetermined time is provided for observing the subsequent situation.

These states correspond to the time between t3 and t5 in the control time chart in FIG. 4. That is, although, at time t3 during the idling stop state, the driver's seat belt is unfastened and the idling stop state (I / S status in the figure) has transitioned to the temporary idling stop state, when, at time t4, before the predetermined time has elapsed, the driver's driver seat belt is fastened or secured again, and the clutch pedal is depressed at time t5, the engine 21 is restarted. Thus, in contrast to the conventional system in which the system transitions to the compulsory engine stall state in these cases so that the engine 21 cannot be restarted unless the ignition key 17 is turned ON, in the present embodiment, by depressing on the clutch pedal representing one of starting operation of the vehicle, the engine 21 may be restarted so that one may save the trouble of ON operation of the ignition key switch 17.

In contrast to this, when the predetermined time has elapsed in step S27; it is not possible to assume any more the temporary or provisional operation or action such as the payment of fee. Thus, the process proceeds to step S29 to the compulsory engine stall state. This compulsory engine stall state refers to a state in which the engine 21 cannot be restarted by a releasing operation such as depression of the clutch pedal, but the engine 21 is restarted only by turning ON the ignition key switch 17.

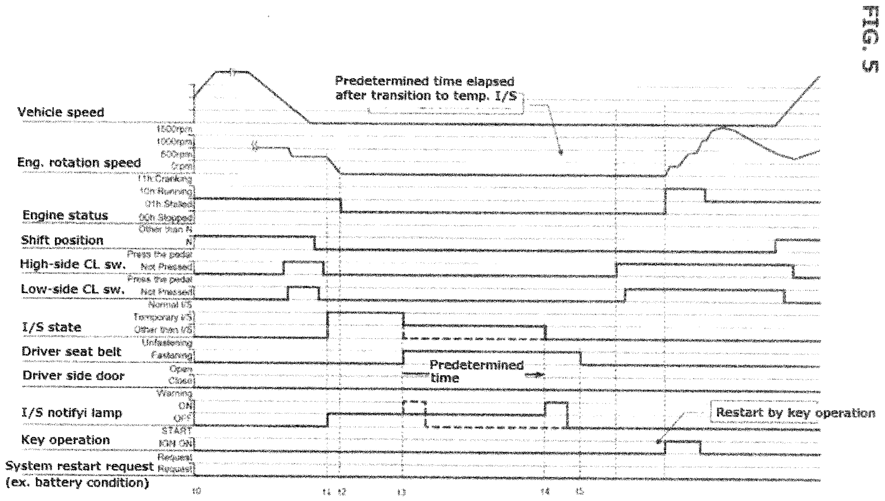

FIG. 5 is another control time chart of the idling stop system 1 in the present embodiment. The states described above correspond to the time between t3 and t5 in the figure. In other words, since the driver's seat belt has been unfastened at time t3 during the idling stop, the idling stop state (i.e. I / S state in the figure) transitions to the temporary idling stop state. However, before the time t5 at which the driver's seat belt fastened again, since the predetermined time has elapsed at time t4, the idling stop state is set from the prevailing temporary idling stop stat to the compulsory engine stall state.

Further, in step S26 when the vehicle door is in the open state and the driver's seat belt is in the non-fastening state, the likelihood of exit movement from the vehicle is high rather than of a temporary operation. Thus, control proceeds to step S29 to transition from the prevailing tentative idling stop state to the compulsory engine stall state. Therefore, even if the restart condition is satisfied, the engine 21 will not be restarted unless the ignition key 17 is turned ON.

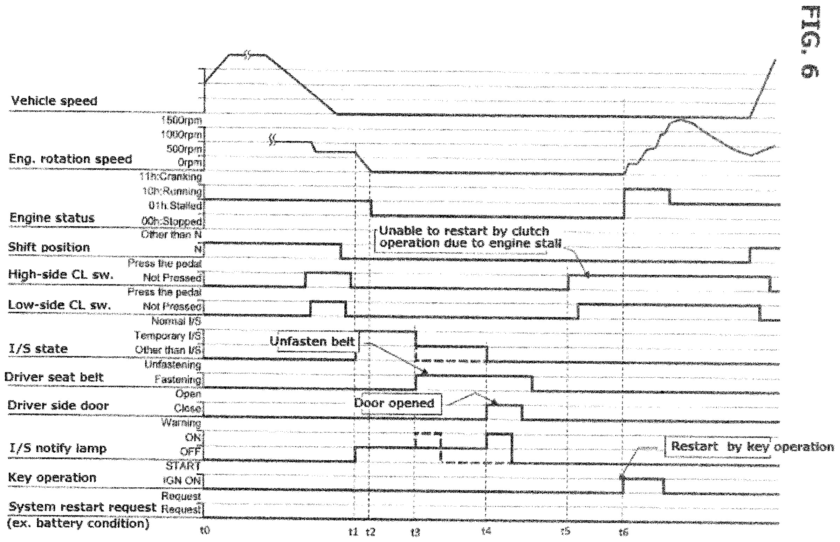

FIG 6 is still another control time chart of the idling stop system 1 in the present embodiment. These states correspond to the time between t3 and t6 in the figure. In other words, at time t3 during idling stop, since the driver's seat belt is unfastened, the idling stop state (I / S state in the figure) transitions to the temporary idling stop state. However, at time 4, since the vehicle door is opened as well, at the time t4, the temporary idling stop state transfers to the compulsory engine stall state. Subsequently, at time t5, even if the clutch pedal depression is executed as one of the restart operations, the compulsory engine stall state will not allow the engine to be restarted, but the engine 21 will be restarted only when the ignition key is turned ON at time t6.

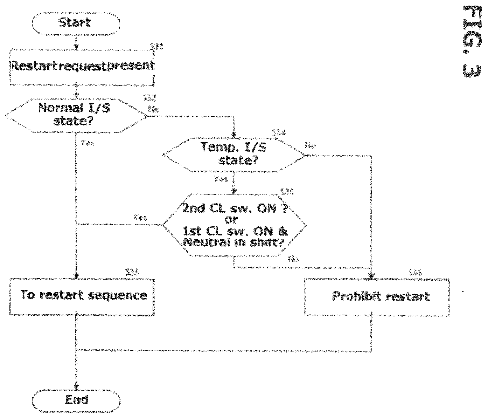

Now, a description is given of a control procedure when a restart request signal is input during idling stop. FIG 3 is a flowchart showing a control procedure when the restart request signal is input in the idling stop state. In step S31, in FIG. 3, the ECM11 reads from ECUD25 and the like a restart request to restart the engine 21 due to, for example decrease in the capacity of the battery 23. In step S32, it is determined whether or not the normal idling stop state is in place, i.e., whether the normal idling stop state is in place, or the other, temporary idling stop state or compulsory engine stall state are in place. In the normal idling stop state, control proceeds to step S33 to perform a normal restart sequence, i.e., driving a starter motor 22 to crank the engine 21 for restarting, for example.

In the case other than the normal idling stop state, control proceeds to step S34 to determine whether or not the temporary idling stop state is in place, i.e., whether the temporary idling stop state is in place or the compulsory engine stall state is in place. In the compulsory engine stall state, even a restart request is present, the engine 21 will not be allowed to be restarted except by turning ON of the ignition key 17 (see time between t4 and t6 in FIG. 6).

In contrast, in the case of the temporary idling stop state, the process proceeds to step S35 to determine whether or not the second clutch switch 15 is ON, or whether or not the neutral switch 16 is ON and the first clutch switch 14 is ON. If either of these determinations is confirmed, control proceeds to step S33 to execute the restart sequence. In contrast, if neither of these is satisfied, control proceeds to step S36 and prohibits the restart of the engine 21 despite the presence of the restart request from the ECUD 25 unless the depression condition of the clutch pedal is satisfied.

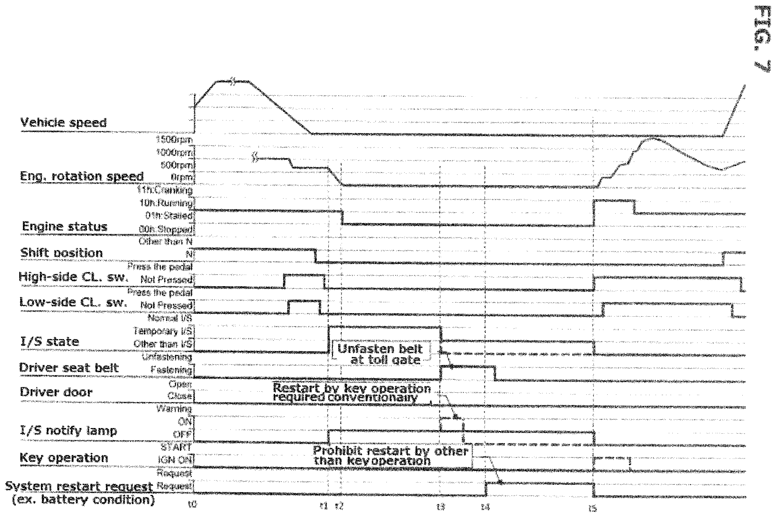

FIG. 7 is yet still another control time chart of the idling stop system 1 in the present embodiment; these states correspond to the time between t3 and t5. In other words, at time t3 during idling stop, in response to the driver's seat belt being unfastened, the idling stop state (I / S state in the figure) is shifted to the temporary idling stop state. At time t4 in this state, even if a restart request for the engine 21 is input due a condition such as a power shortage of the battery 23, the engine 21 will be prohibited from being restarted unless the clutch pedal is depressed at time t5.

As described above, the idling stop control system according to the present embodiment has the following effects.
(1) According to the idling stop control system in the present embodiment, even at a provisional or temporary opening/closing of the vehicle door or unfastening of the driver's seat belt, the idling stop state is maintained so that the idling stop control may function more effectively. Further, in these states, since no transition is made to the compulsory engine stall, the engine restart is available without the need of key operation so that trouble can be solved.
(2) On the other hand, the drop-off state of the driver is determined and the process transitions to the compulsory engine stall state when the vehicle door is in open state and the driver's seat belt is in the non-fastening state. Thus, the restart of the engine 21 may be avoided without the driver getting in the vehicle.
(3) According to the idling stop control system in the present embodiment, when determining a provisional or temporary vehicle door opening/closing operation or detachment driver's seat belt, the system transitions to the compulsory engine stall so that the engine 21 will be prohibited from being restarted if a predetermined time has passed. Thus, it is possible to suppress the discharge of the battery 23 in the state in which the engine 21 is stopped.
(4) According to the idling stop control system in the present embodiment, since the operation of depression of the clutch pedal is set as a prerequisite or condition for restarting the engine 21, it is possible to restart the engine 21 in the series of operations associated with the vehicle start, the waste operation is unnecessary.
(5) According to the idling stop control system in the present embodiment, even if an engine start request is input in the temporary idling stop state, since the engine 21 will not be restarted unless the clutch pedal is operated for depression, it is possible to avoid restart of the engine 21 in a state in which the driver does not ride.
(6) According to the idling stop control system in the present embodiment, since the display is made by the notifying lamp 18 to the effect that the engine restart is allowed or prohibited so that the driver can grasp the current state accurately.

The driver seat belt switch 12 corresponds to the seat belt fastening detector according to the present invention, the vehicle door switch 13 corresponds to a door open/close detector according to the present invention, the engine control module 11 corresponds to a control means according to the present invention, and the notifying lamp 18 corresponds to a display unit according to the present invention.

### DESCRIPTION OF REFERENCE NUMERALS

- 1: idling stop system
- 11: engine control module
- 12: driver's seat belt switch
- 13: vehicle door switch
- 14: first clutch switch
- 15: second clutch switch
- 16: neutral switch
- 17: ignition key switch
- 18: notifying lamp
- 21: engine
- 22: starter motor
- 23: battery
- 24: current sensor
- 25, 26, 27, 28: electronic control unit

## Claims

1. An idling stop control system, comprising:
a seat belt fastening detector (12) for detecting a fastening or non-fastening state of a driver's seat belt,
a door open/close detector (13) for detecting an opened state and the closed state of a vehicle door,
a control means (11) to restart an engine (21) when a predetermined restart condition is satisfied in an engine stop state caused by the idling stop control, **characterized in that** the control means (11) is configured to allow the engine (21) to be restarted when the predetermined restart condition is satisfied in cases where the vehicle door is in the open state with the driver's seat belt being in the fastening state or the vehicle door is in the closed state with the driver's seat belt being in the non-fastening state, and wherein
the control means (11) is configured to prohibit the engine (21) from being restarted even if the predetermined restart condition is satisfied in a case where the vehicle door is in the open state and the driver's seat belt is in the non-fastening state.

2. The idling stop control system as claimed in claim 1, wherein, when the vehicle door is in the open state with the driver's seat belt being in the fastening state or the vehicle door is in the closed state with the driver's seat belt being in the non-fastening state, the control means (11) is further configured to prohibit the engine (21) from being restarted after a predetermined time has passed thereafter.

3. The idling stop control system as claimed in either claim 1 or 2, wherein the predetermined restart condition includes a depressing operation of a clutch pedal.

4. The idling stop control system as claimed in claim 3, wherein the depressing operation of the clutch pedal includes at least one of an operation of full depression of the clutch pedal and an operation of even a little depression of the clutch pedal with a transmission being in a neutral position.

5. The idling stop control system as claimed in either claim 3 or 4, wherein the restart condition includes an engine start request from a vehicle system and the control means (11) is configured to prohibit the engine (21) from being restarted even if the engine start request from the vehicle system is present if the depression operation of the clutch pedal is not accompanied in the cases in the cases where the vehicle door is in the open state with the driver's seat belt being in the fastening state or the vehicle door is in the closed state with the driver's seat belt being in the non-fastening state.

6. The idling stop control system as claimed in any one of claims 1 to 5, further comprising a display unit that notifies that the engine (21) is allowed to be restarted in the cases where the vehicle door is in the open state with the driver's seat belt being in the fastening state or the vehicle door is in the closed state with the driver's seat belt being in the non-fastening state and that notifies that the engine (21) is prohibited from being restarted in the case where the vehicle door is in the open state with the driver's seat belt is in the non-fastening state.

## Patentansprüche

1. Leerlaufstopp-Steuersystem, umfassend:
einen Sicherheitsgurt-Befestigungsdetektor (12) zum Erfassen eines befestigten oder nicht befestigten Zustands eines Fahrer-Sicherheitsgurts,
einen Tür-Öffnungs-/Schließdetektor (13) zum Erfassen eines geöffneten Zustands und des geschlossenen Zustands einer Fahrzeugtür,
eine Steuereinrichtung (11) zum Neustarten eines Motors (21), wenn eine vorgegebene Neustartbedingung in einem durch die Leerlaufstoppsteuerung verursachten Motorstopp-Zustand erfüllt ist, **dadurch gekennzeichnet, dass**
die Steuereinrichtung (11) zum Ermöglichen eines Neustarts des Motors (21) konfiguriert ist, wenn die vorgegebene Neustartbedingung in Fällen erfüllt ist, bei denen sich die Fahrzeugtür im geöffneten Zustand befindet, wobei sich der Fahrer-Sicherheitsgurt im befestigten Zustand befindet, oder sich die Fahrzeugtür im geschlossenen Zustand befindet, wobei sich der Fahrer-Sicherheitsgurt im nicht befestigten Zustand befindet, und wobei
die Steuereinrichtung (11) zum Verhindern des Neustarts des Motors (21) konfiguriert ist, selbst wenn die vorgegebene Neustartbedingung in einem Fall erfüllt ist, bei dem sich die Fahrzeugtür im geöffneten Zustand befindet und sich der Fahrer-Sicherheitsgurt in nicht befestigten Zustand befindet.

2. Leerlaufstopp-Steuersystem nach Anspruch 1, wobei, wenn sich die Fahrzeugtür im geöffneten Zustand befindet, wobei sich der Fahrer-Sicherheitsgurt im befestigten Zustand befindet, oder sich die Fahrzeugtür im geschlossenen Zustand befindet, wobei sich der Fahrer-Sicherheitsgurt im nicht befestigten Zustand befindet, die Steuereinrichtung (11) ferner zum Verhindern eines Neustarts des Motors (21) konfiguriert ist, nachdem eine vorgegebene Zeit danach vergangen ist.

3. Leerlaufstopp-Steuersystem nach Anspruch 1 oder 2, wobei die vorgegebene Neustartbedingung einen Niederdrückvorgang eines Kupplungspedals umfasst.

4. Leerlaufstopp-Steuersystem nach Anspruch 3, wobei der Niederdrückvorgang des Kupplungspedals einen Vorgang des vollständigen Niederdrückens des Kupplungspedals und/oder einen Vorgang des nur geringfügigen Niederdrückens des Kupplungspedals umfasst, wobei sich ein Getriebe in neutraler Position befindet.

5. Leerlaufstopp-Steuersystem nach Anspruch 3 oder 4, wobei die Neustartbedingung eine Motorstartanforderung von einem Fahrzeugsystem umfasst und die Steuereinrichtung (11) zum Verhindern des Neustarts des Motors (21) konfiguriert ist, selbst wenn die Motorstartanforderung vom Fahrzeugsystem vorliegt, falls der Niederdrückvorgang des Kupplungspedals in den Fällen nicht begleitet wird, bei denen sich die Fahrzeugtür im geöffneten Zustand befindet, wobei sich der Fahrer-Sicherheitsgurt im befestigten Zustand befindet, oder sich die Fahrzeugtür im geschlossenen Zustand befindet, wobei sich der Fahrer-Sicherheitsgurt im nicht befestigten Zustand befindet.

6. Leerlaufstopp-Steuersystem nach einem der Ansprüche 1 bis 5, ferner umfassend eine Displayeinheit, die anzeigt, dass der Motor (21) in den Fällen neu gestartet werden darf, bei denen sich die Fahrzeugtür im geöffnetem Zustand befindet, wobei sich der Fahrer-Sicherheitsgurt im befestigten Zustand befindet, oder sich die Fahrzeugtür im geschlossenen Zustand befindet, wobei sich der Fahrer-Sicherheitsgurt im nicht befestigten Zustand befindet, und die anzeigt, dass ein Neustart des Motors (21) in dem Fall verhindert wird, bei dem sich die Fahrzeugtür im geöffneten Zustand befindet, wobei sich der Fahrer-Sicherheitsgurt im nicht befestigten Zustand befindet.

## Revendications

1. Système de commande d'arrêt au ralenti, comprenant :
un détecteur de fixation de ceinture de sécurité (12) pour détecter un état de fixation ou de non-fixation d'une ceinture de sécurité du conducteur,
un détecteur de portière ouverte/fermée (13) pour détecter un état ouvert et l'état fermé d'une portière de véhicule,
un moyen de commande (11) pour redémarrer un moteur (21) lorsqu'une condition de redémarrage prédéterminée est satisfaite dans un état d'arrêt de moteur provoqué par la commande d'arrêt au ralenti, **caractérisé en ce que**
le moyen de commande (11) est configuré pour permettre le redémarrage du moteur (21) lorsque la condition de redémarrage prédéterminée est satisfaite dans les cas où la portière de véhicule est à l'état ouvert avec la ceinture de sécurité du conducteur étant à l'état de fixation ou la portière de véhicule est à l'état fermé avec la ceinture de sécurité du conducteur étant à l'état de non-fixation et dans lequel
le moyen de commande (11) est configuré pour empêcher le redémarrage du moteur (21) même si la condition de redémarrage prédéterminée est satisfaite dans le cas où la portière de véhicule est à l'état ouvert et la ceinture de sécurité du conducteur est à l'état de non-fixation.

2. Système de commande d'arrêt au ralenti tel que revendiqué dans la revendication 1, dans lequel, lorsque la portière de véhicule est à l'état ouvert avec la ceinture de sécurité du conducteur étant à l'état de fixation ou la portière de véhicule est à l'état fermé avec la ceinture de sécurité du conducteur étant à l'état de non-fixation, le moyen de commande (11) est en outre configuré pour empêcher le redémarrage du moteur (21) après l'écoulement d'une durée prédéterminée.

3. Système de commande d'arrêt au ralenti tel que revendiqué dans la revendication 1 ou 2, dans lequel la condition de redémarrage prédéterminée comporte une opération d'enfoncement d'une pédale d'embrayage.

4. Système de commande d'arrêt au ralenti tel que revendiqué dans la revendication 3, dans lequel l'opération d'enfoncement de la pédale d'embrayage comporte au moins l'une d'une opération d'enfoncement à fond de la pédale d'embrayage et d'une opération d'enfoncement même léger de la pédale d'embrayage avec une transmission étant dans une position neutre.

5. Système de commande d'arrêt au ralenti tel que revendiqué dans la revendication 3 ou 4, dans lequel la condition de redémarrage comporte une demande de démarrage de moteur provenant d'un système de véhicule et le moyen de commande (11) est configuré pour empêcher le redémarrage du moteur (21) même si la demande de démarrage de moteur provenant du système de véhicule est présente si l'opération d'enfoncement de la pédale d'embrayage n'est pas effectuée dans les cas où la portière de véhicule est à l'état ouvert avec la ceinture de sécurité du conducteur étant à l'état de fixation ou la portière de véhicule est à l'état fermé avec la ceinture de sécurité du conducteur étant à l'état de non-fixation.

6. Système de commande d'arrêt au ralenti tel que revendiqué dans l'une quelconque des revendications 1 à 5, comprenant en outre une unité d'affichage qui indique que le moteur (21) est autorisé à être redémarré dans les cas où la portière de véhicule est à l'état ouvert avec la ceinture de sécurité du conducteur étant à l'état de fixation ou la portière de véhicule est à l'état fermé avec la ceinture de sécurité du conducteur étant à l'état de non-fixation et qui indique que le moteur (21) est empêché d'être redémarré dans le cas où la portière de véhicule est à l'état ouvert avec la ceinture de sécurité du conducteur est à l'état de non-fixation.
